# EUROPEAN PATENT APPLICATION

(11) **EP 2 722 265 A1**
(43) Date of publication of application: **23.04.2014**
(21) Application number: 13189109.5
(22) Date of filing: 17.10.2013
(51) Int. Cl.: B62K 25/02, B25B 27/00, F16B 2/18

(54) **Apparatus for holding a bicycle wheel in a bicycle frame**

(30) Priority: 22.10.2012 GB 201218937
(71) Applicant: Hall, William Arthur James, Brewood, Staffordshire ST19 9BD (GB); Evans, Thomas Norman, Brewood, Staffordshire ST19 9BZ (GB)
(72) Inventor: Hall, William Arthur James, Brewood, Staffordshire ST19 9BD (GB); Evans, Thomas Norman, Brewood, Staffordshire ST19 9BZ (GB)
(74) Representative: Ashton, Timothy

(57) **Abstract**

An apparatus (1) for holding a bicycle wheel in a bicycle frame, including:
an elongate member (3);
a first engaging member (5) positioned at one end of the elongate member (3);
a second engaging member (7) positioned at an opposite end of the elongate member (3); and
a pivotally moveable actuating member (9) for effecting movement of the second engaging member (7) towards the first engaging member (5);
wherein the actuating member (9) includes holding means (11) for engaging with a spoke of the bicycle wheel.

## Description

### Description of Invention

This invention relates to an apparatus for holding a bicycle wheel in a bicycle frame.

Bicycle users have to maintain the tyres of the bicycle to ensure that they are roadworthy. The tyre can become worn and require replacement. The tyre may become punctured during use and the inner tube therein may need repair, or replacement. Such procedures involve the user having to remove the bicycle wheel from the bicycle frame to enable access to the tyre and inner tube.

Apparatus for enabling a quick release and fitting of the bicycle wheel from and to the bicycle frame are known. Such apparatus typically have an elongate member for receipt in an axial opening through a wheel hub, and first and second engaging members connected to either end of the elongate member. The apparatus has a lever that can be pivotally moved to move the first and second engaging members towards each other so that they engage the bicycle frame thus effectively holding the bicycle wheel relative to the bicycle frame. Release of the bicycle wheel is effected by pivotally moving the lever in the opposite direction to disengage the engaging members from the frame.

According to a first aspect of the invention we provide an apparatus for holding a bicycle wheel in a bicycle frame, including:
an elongate member;
a first engaging member positioned at one end of the elongate member;
a second engaging member positioned at an opposite end of the elongate member; and
a pivotally moveable actuating member for effecting movement of the second engaging member towards the first engaging member;
wherein the actuating member includes holding means for engaging with a spoke of the bicycle wheel.

Further features of the various aspects of the invention are set out in dependent claims 2 to 37 attached hereto.

Embodiments of the invention will now be described by way of example only with reference to the accompanying drawings, of which:
Fig. 1 a is a side view of a first embodiment of an apparatus of the present invention;
Fig. 1b is a perspective view of a first embodiment of an apparatus of the present invention connected to a wheel hub of a bicycle wheel;
Fig. 2a is a side view of a part of an actuating member of the first embodiment of an apparatus of the present invention;
Fig. 2b is a side view of an actuating member of a second embodiment of an apparatus of the present invention;
Fig. 3a is a side view of an actuating member of a third embodiment of an apparatus of the present invention;
Fig. 3b is a plan view of the actuating member of Figure 3a;
Fig. 4 is a side view of the first embodiment of the apparatus of the present invention in use;
Fig. 5 is a plan view of a first engaging member of an alternative embodiment of the first embodiment of the present apparatus;
Fig. 6a is a side view of an actuating member of a fourth embodiment of the present invention in a storage position;
Fig. 6b is a side view of the actuating member of Figure 6a in an in-use position;
Fig. 6c is a side view of an alternative configuration of the actuating member of the fourth embodiment between a storage and in-use position;
Fig. 7 is a side view of an actuating member of a fifth embodiment of the present invention;
Fig. 8a is a side view of an actuating member of a sixth embodiment of the present invention in a storage position;
Fig. 8b is a side view of the actuating member of Figure 8a in an in-use position;
Fig. 9a is a side view of an actuating member of a seventh embodiment of the present invention in an opened position;
Fig. 9b is a side view of the actuating member of Figure 9a in a closed position; and
Fig. 10 is a side view of an actuating member of an eighth embodiment of the present invention.

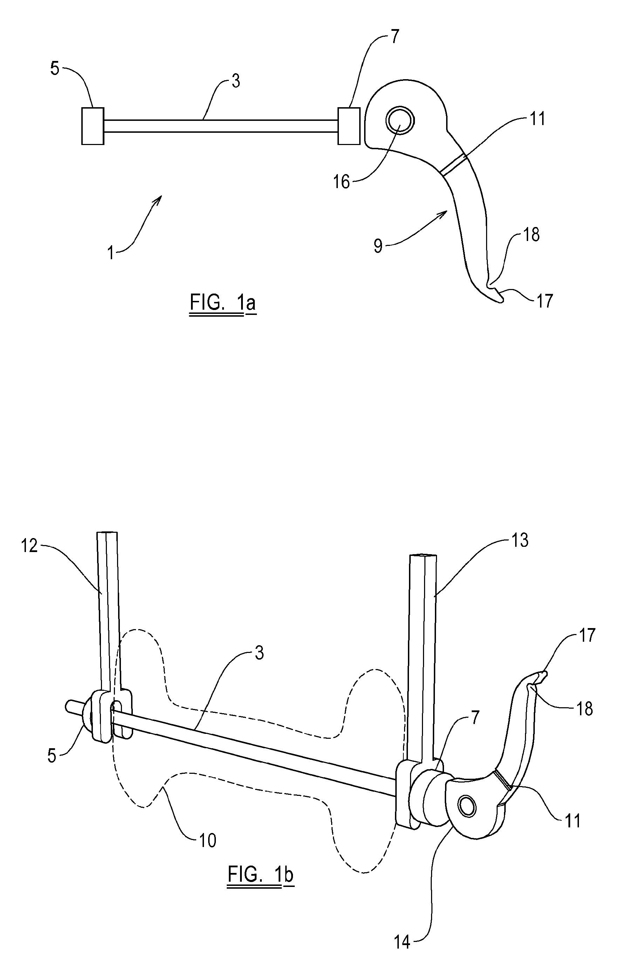

Referring firstly to Figures 1a and 1b, these show an apparatus 1 in accordance with the present invention for holding a bicycle wheel in a bicycle frame 12, 13. The apparatus includes an elongate member 3 for receipt in an axial opening through a wheel hub 10 and a pair of engaging members 5, 7 positioned at opposite ends of the elongate member 3. The apparatus 1 includes a pivotally moveable actuating member 9 for effecting movement of the second engaging member 7 towards the first engaging member 5, in a fashion which is well known in the art.

In more detail the first engaging member 5 has a threaded aperture for engagement with a correspondingly threaded formation at one end of the elongate member 3. The second engaging member 7 also has an aperture, but without any thread and of a diameter slightly larger than the diameter of the elongate member 3. This permits the second engaging member 7 to slide along the elongate member 3.

In the example shown in Figure 1a, the actuating member 9 is pivotally connected to an end of the elongate member 3, but it could be pivotally connected directly or indirectly to the second engaging member 7. All that is functionally required is that pivotal movement of the actuating member 9 effects movement of the second engagement member 7 towards the first engaging member 5. The actuating member 9 is generally elongate and has a portion which tapers towards its free end 17. The free end 17 is provided with a recess 18 having a concave portion for engaging with a bead of a bicycle tyre.

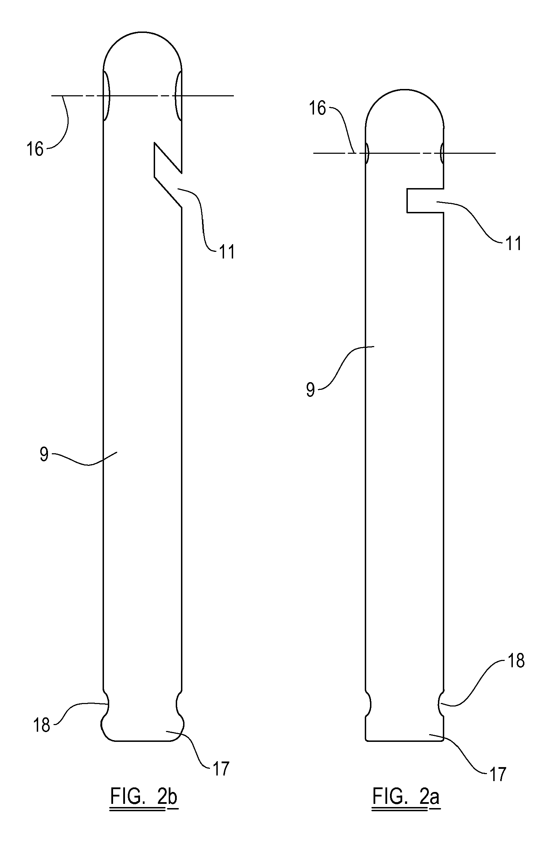

Advantageously the apparatus 1 in accordance with the present invention includes holding means for engaging with a spoke of a bicycle wheel. In the embodiment shown in Figures 1a and 1b the holding means is a recess 11 which is positioned adjacent/close to a pivoting axis 16 of the actuating member 9. Figures 2a and 2b show first and second embodiments that have alternative configurations of the recess 11. In Figure 2a the recess 11 extends inwardly towards a generally elongate axis of the actuating member 9. In Figure 2b the recess 11 extends away from a free end 17 of the actuating member 9 as it extends towards the generally elongate axis of the actuating member 9.

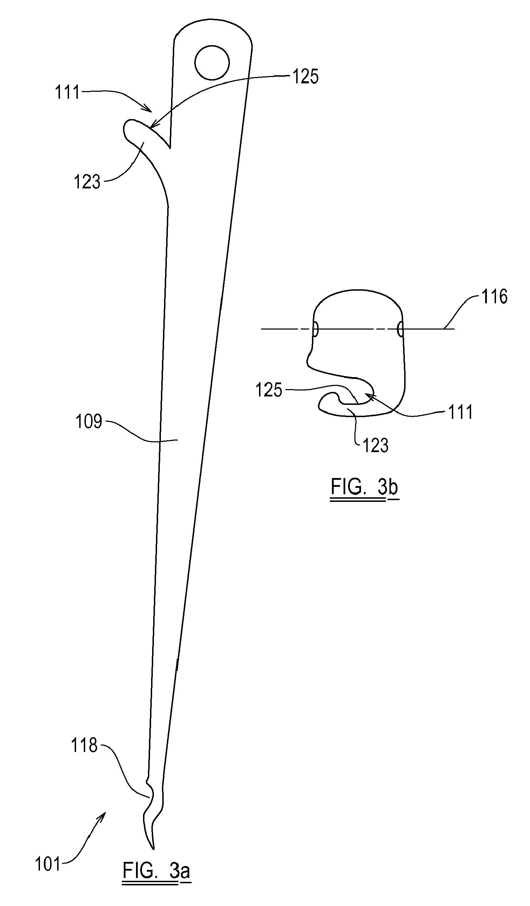

Figures 3a and 3b show a third embodiment of the invention which has an alternative configuration of the holding means. Features in common with the first embodiment have been given the same reference numeral with the addition of 100. In the third embodiment the holding means includes a projection 123 that extends away from a generally elongate axis of the actuating member 109 and extends away from the free end 117 of the actuating member 109. An inwardly facing side wall 125 of the projection 123 together with an adjacent side of the main body of the actuating member 109 define a recess 111 to receive a spoke. As shown in the end view in figure 3b, a remote end of the projection 123 is enlarged to assist with retaining the spoke in the recess 11 in use.

Alternative configurations of the recess 11 could also be used so long as they provide the functionality of being able to engage a spoke of a bicycle wheel during use, so as to hold the actuating member relative to the spoke.

The apparatus of the present invention is highly advantageous in that it provides the dual functionality of an apparatus for holding a bicycle wheel in a bicycle frame, but whilst also providing a device for assisting in removal of a tyre to, for example, repair a puncture in the inner tube or replace the inner tube. This ensures that a user need not take separate tyre levers with them when going for a ride on their bicycle. Often, a cyclist may forget to take such tools with them, but with the present invention avoids this problem, as the device is always present on the bicycle.

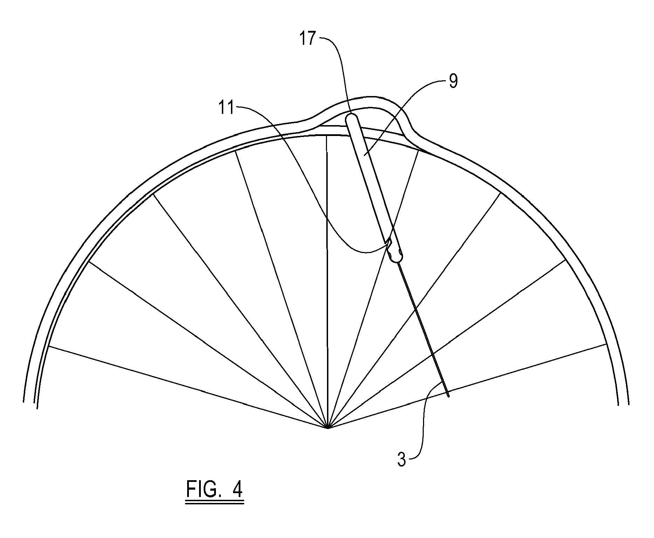

Operation of the apparatus of the first embodiment of the invention to remove part or whole of a tyre will now be described with reference to Figure 4. The second and third embodiments are used in a similar manner and their use will be apparent to one skilled in the art from the following desciption.

The user operates the apparatus to release and remove the bicycle wheel from the bicycle frame. The user removes apparatus 1 from the wheel by unscrewing the first engaging member 5 from the elongate member 3 and sliding the elongate member 3 out from the axial opening of wheel hub 10 (shown in dashed lines in figure 1b).

The user positions the free end 17 of the actuating member 9 in between the tyre and the rim of the wheel. The user engages the recess 18 under the bead of the tyre and, using the rim as a fulcrum, pivots the actuating member 9 downwardly towards the hub 10, and engages the recess 11 with the most closely aligned spoke. The actuating member of a second apparatus in accordance with the invention (e.g. from the front wheel, if the rear wheel's inner tube is being replaced) is used on an adjacent part of the tyre, in a fashion well known in the art.

The user then removes the tyre (if necessary) and the inner tube for replacement or repair. The replacement or repaired inner tube and tyre are then fitted onto the wheel, in known fashion, and the wheel reattached to the bicycle frame using the apparatus 1, again, in known fashion

In the above embodiments the recess 11 is positioned remotely from the free end 17 of the actuating member 9, near its pivoting axis 16. However, it will be appreciated that the recess 11 need only be suitably spaced from the free end 17 to permit the recess 11 to engage with a spoke during use.

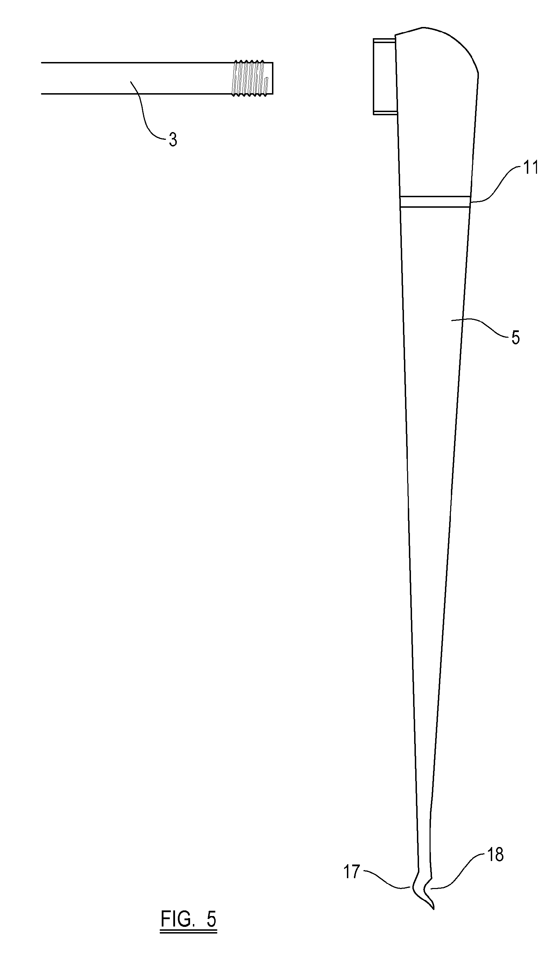

In an alternative embodiment shown in Figure 5 the first engaging member 5 may be formed as a tyre lever (e.g. with its own recesses 11, 18). The user therefore has the option, once the apparatus 1 has been removed from the wheel hub 10, of using the tyre lever-shaped first engaging member 5 to remove the tyre either in isolation or in combination with the actuating member 9. It is envisaged that such a tyre lever-shaped first engaging member 5 could be provided irrespective of whether the opposite end of the apparatus 1 is provided with a tyre lever-shaped actuating member 9.

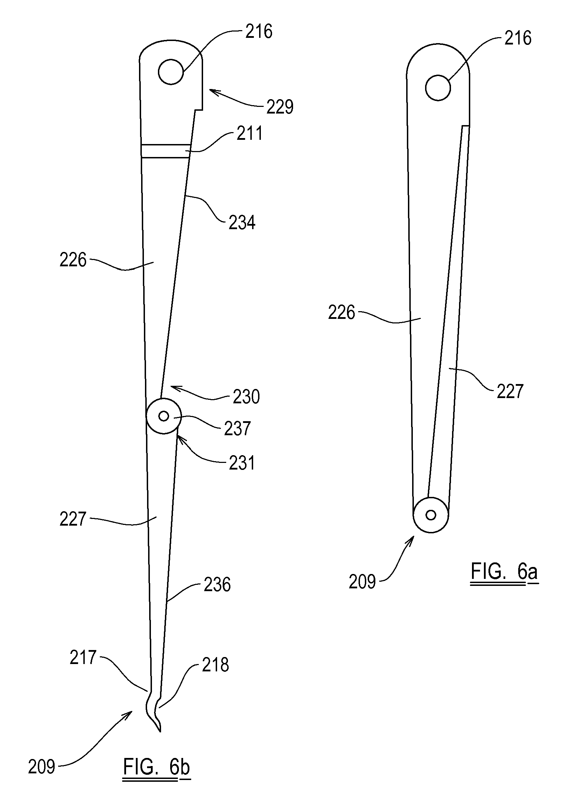

An actuating member of a fourth embodiment of the invention is shown in Figures 6a and 6b. Features in common with the first embodiment have been given the same reference numeral with the addition of 200. Apparatus 201 has an actuating member 209 that includes a first part 226 and a second part 227 which are connected to each other by a pivotal connection 237. The first part 226 is pivotally connected to the elongate member 203.

The pivotal connection 237 permits the first and second parts 226, 227 to move relative to each other between a storage position, in which the parts 226, 227 lie substantially side-to-side and an in-use position, in which the parts 226, 227 lie substantially end-to-end. The first part 226 tapers as it extends from its pivotal connection 216 (its first end 229) towards the second part 227 (its second end 230). The second part 227 tapers as it extends from its connection at 231 to the first part 226 towards its free end at 217. The sloping surfaces 234, 236 abut each other when the parts 226, 227 lie in the storage position.

The first part 226 includes recess 211 at or adjacent the pivot axis 216. The free end 217 of the second part 227 includes a recess 218 for engaging with a bead of a tyre. The recess 218 is of a similar form to that of the previous embodiments.

An advantage of the fourth embodiment is that the actuating member 209 is compact when in the storage position. When the actuating member 209 is to be used as a tyre lever, the actuating member 209 must be moved to its in-use position. This extended length advantageously provides a larger moment for the tyre lever, thus requiring less force from the user when using the actuating member 209 to separate the tyre from the wheel.

In alternative configurations of the fourth embodiment the first and/or second part 226, 227 may be connected to the remainder of the apparatus 201 by a releasable connection. Thus the user is not required to remove the whole of the apparatus 201 from the wheel in order to use the first and/or second part 226, 227 as a tyre lever.

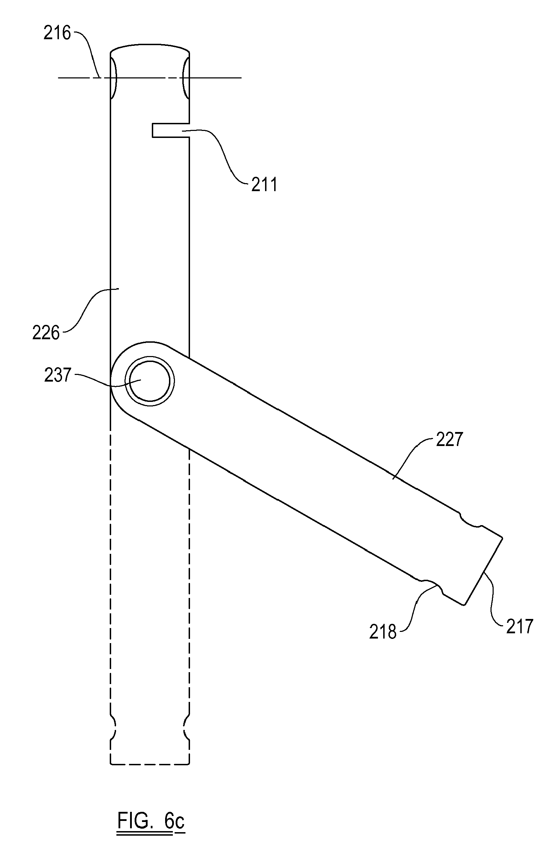

In an alternative configuration of the fourth embodiment shown in Figure 6c, the first and second parts 226, 227 are pivotally connected to each other, but do not abut each other in the storage position (although they could without departing from the scope of the invention). The first and second parts 226, 227 are held spaced apart by the pivotal connection 237. The parts 226, 227 lie above each other along their elongate axis in the storage position. In the in-use position, the first and second parts 226, 227 are held end-to-end as shown by the dashed lines.

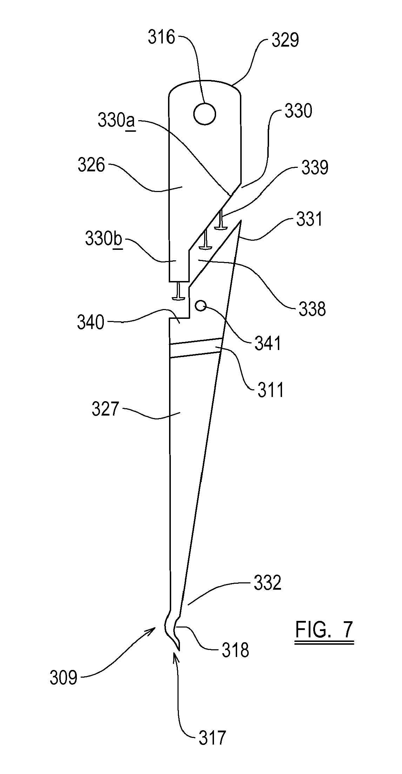

An actuating member of a fifth embodiment of the invention is shown in Figure 7. Features in common with the fourth embodiment have been given the same reference numeral with the addition of 100. Apparatus 301 has an actuating member 309 with a first part 326 and a second part 327 which are connected end-to-end by a releasable connection 338. The releasable connection 338 has co-operating parts which are provided at or on the respective ends of the first and second parts 326, 327.

In more detail, the first part 326 has a male mating connection 330 formed on an end remote from the pivot axis 316. The second part has a female mating connection 331 formed on an end of the second part 327 remote from the recess 318. The male mating connection 330 includes a tapered portion 330a and a projection 330b. The female mating connection 331 has a corresponding tapered portion 331 a and a receiving formation 331 b to receive the projection 330b. In an alternative configuration, the first and second parts may be connected to each other by generally flat surfaces which abut, together with appropriate co-operating parts.

The releasable connection 338 holds the female and male mating connections 330, 331 together. The co-operating parts include engaging formations on the first part 326 and receiving formations (not shown) on the second part 327. The engaging formations are elongate projections 339 with end portions shaped to lock into correspondingly shaped recesses 340 of the receiving formations. The positioning of projections 339 and recesses 340 could, of course, be reversed. A release member 341 is provided on the second part 327 which when moved by the user to an unlock position moves the elongate projections 339 out of engagement with the recesses 340 to release the first and second parts 326, 327 from each other.

Advantageously, in the fifth embodiment, one end of the second part 327 includes a recess 311 for engaging with a spoke. An opposite end 332 of the second part 327 includes a recess 318 for engaging with a bead of a tyre. Thus, the second part 327 of the actuating member can be used as a tyre lever when released from the remainder of the apparatus 301.

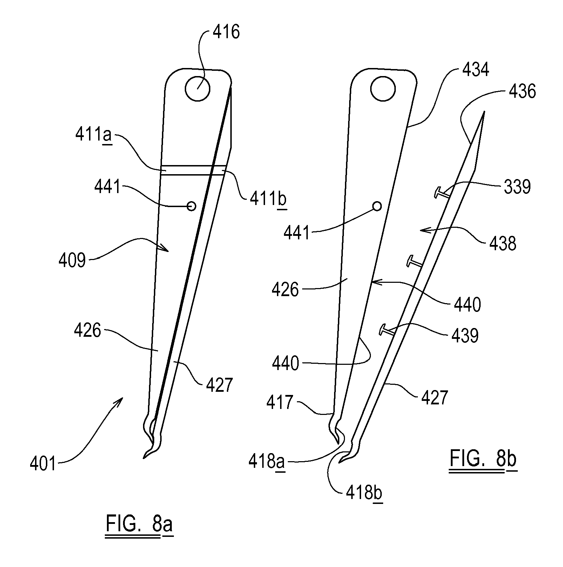

An actuating member of a sixth embodiment of the invention is shown in Figures 8a and 8b. Features in common with the fifth embodiment have been given the same reference numeral with the addition of 300. Apparatus 401 has an actuating member 409 with first and second parts 426, 427. The first part 426 is releasably connected to the remainder of the apparatus 401. The first and second parts 426, 427 are connected by a releasable connection 438 that is provided on sides 434, 436 of the first and second parts 426, 427 respectively. The first part 426 has a side 434 tapers from its end which is pivotally connected at 416 to its free end. The second part 427 has a side 436 with a corresponding taper. The sides 434, 436 abut each other when the parts 426, 427 lie in their storage position. The releasable connection 438 and release member 441 are similar to those described in the fifth embodiment.

A feature of the sixth embodiment is that opposite ends of each part 426, 427 has a respective holding means in the form of a recess 411a, 411 b and a respective recess for engaging a bead of a tyre 418a, 418b. Concave portions of the recesses 418a, 418b mate with each other when the parts 426, 427 are connected in the storage position. This feature is advantageous as the user can use the first and second parts 426, 427 as first and second tyre levers.

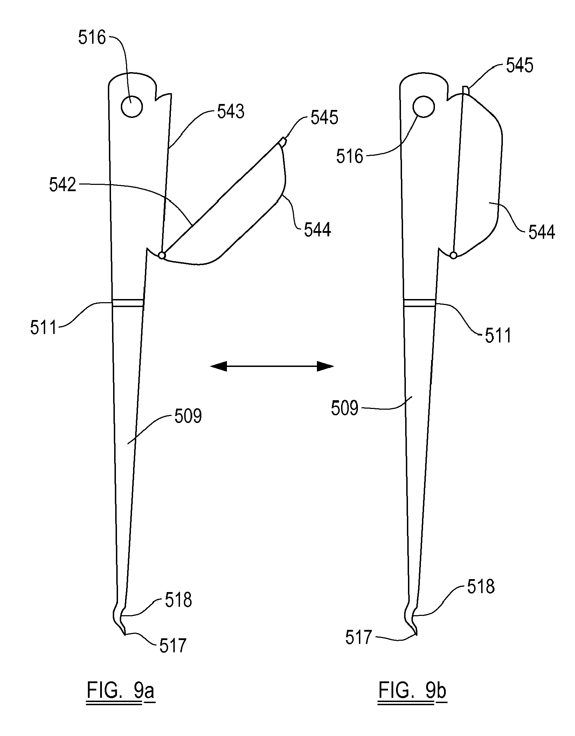

An actuating member of a seventh embodiment of the invention is shown in Figures 9a and 9b. Features in common with the first embodiment have been given the same reference numeral with the addition of 500. Apparatus 501 has an actuating member 509 which includes a storage means 542. The storage means 542 has a recess 543 which is covered by a cover 544. The cover 544 is pivotally moveable between closed (figure 9b) and open (figure 9a) positions. A release button/catch 545 is provided to open the cover / lock it in its closed position. The storage means 542 permits storage of inner tube repair items, for example, puncture repair and sandpaper patches. This is advantageous as the items are accessible in a convenient location ready when required. It will be appreciated that the storage means 542 may be incorporated into any of the actuating members described in the embodiments previously discussed. Furthermore, the provision of a storage means 542 may also be provided with other known apparatus for holding a wheel to a bicycle frame, irrespective of whether such apparatus include a holding means.

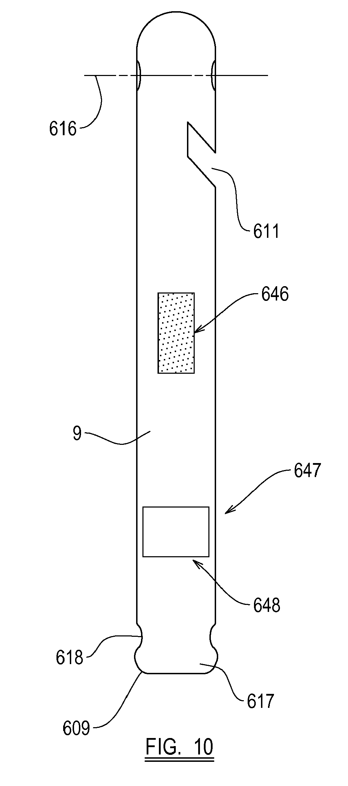

An actuating member of an eighth embodiment of the invention is shown in Figure 10. Features in common with the first embodiment have been given the same reference numerals with the addition of 600. Actuating member 609 includes an abrasive surface for use in inner tube repairs. The actuating member 609 also has a storage means 647 with a recess648 for storing puncture repair items.

Other embodiments of the present invention include providing a light emitting device on the actuating member for use as a safety light to alert drivers during roadside repairs in poor light conditions. The actuating member may also be provided with a padded surface to provide an improved grip for the. It will be appreciated that any or all of these features can be incorporated in all of the previously described embodiment or known apparatus.

It will be appreciated that the various features described in relation to one embodiment may be suitably and advantageously combined with features of the other embodiments in accordance with the present invention.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Further features of one or more aspects of the invention are set out in the numbered clauses provided below.

### CLAUSES

1. An apparatus for holding a bicycle wheel in a bicycle frame, including:
   an elongate member;
   a first engaging member positioned at one end of the elongate member;
   a second engaging member positioned at an opposite end of the elongate member; and
   a pivotally moveable actuating member for effecting movement of the second engaging member towards the first engaging member;
   wherein the actuating member includes holding means for engaging with a spoke of the bicycle wheel.
2. An apparatus according to clause 1, wherein the actuating member effects movement of the second engaging member along the elongate member.
3. An apparatus according to clause 1 or 2, wherein the actuating member is pivotally connected to the second engaging member.
4. An apparatus according to clause 1 or 2, wherein the actuating member is pivotally connected to the elongate member.
5. An apparatus according to any one of clauses 1 to 4, wherein the first and/or second engaging members are connected to the elongate member.
6. An apparatus according to clause 5, wherein the first engaging member is threadedly connected to the elongate member.
7. An apparatus according to any preceding clause, wherein the second engaging member is slidably supported on the elongate member.
8. An apparatus according to clause 7 wherein the actuating member effects sliding movement of the second engaging member along the elongate member.
9. An apparatus according to any preceding clause, wherein the second engaging member is connected to the actuating member.
10. An apparatus according to any preceding clause, wherein the holding means is positioned remotely from a free end of the actuating member.
11. An apparatus according to clause 9 or 10 wherein the holding means is positioned adjacent or close to a pivot axis of the actuating member.
12. An apparatus according to any preceding clause, wherein the whole or a part of the actuating member is removable from the remainder of the apparatus.
13. An apparatus according to any preceding clause, wherein the holding means includes a recess for receiving a spoke of the bicycle wheel.
14. An apparatus according to clause 13, wherein the recess extends inwardly towards an axis of the actuating member.
15. An apparatus according to clause 13 or 14, wherein the recess extends away from the free end of the actuating member.
16. An apparatus according to any preceding clause, wherein the holding means includes a projection.
17. An apparatus according to clause 16, wherein the projection extends away from a generally elongate axis of the actuating member.
18. An apparatus according to clause 16 or 17, wherein the projection extends away from the free end of the actuating member.
19. An apparatus according to clause 16, 17 or 18, wherein the projection provides at least one side wall of a recess to receive a spoke.
20. An apparatus according to any preceding clause, wherein a free end of the actuating member includes a recess for engaging with a bead of a tyre.
21. An apparatus according to any preceding clause, wherein the actuating member includes a first part and a second part which are connected to each other.
22. An apparatus according to clause 21, wherein the first and second parts are connected to each other by a pivotal connection.
23. An apparatus according to clause 22, wherein an end of the second part remote from its pivotal connection to the first part includes a recess for engaging with a bead of a tyre.
24. An apparatus according to clause 22 or 23, wherein the pivotal connection permits the first and second parts to move between a storage position, in which the parts lie substantially side-to-side and an in-use position, in which the parts lie substantially end-to-end.
25. An apparatus according to clauses 21 to 24, wherein the first part of the actuating member is connected to the remainder of the apparatus by a releasable connection.
26. An apparatus according to clause 21 or 22, wherein the first part and the second part are connected by a releasable connection.
27. An apparatus according to clause 26 wherein co-operating parts of the releasable connection are provided at or on respective ends of the first and second parts.
28. An apparatus according to clause 27 wherein co-operating parts of the releasable connection is provided at or on respective side walls of the first and second parts.
29. An apparatus according to clause 26, 27 or 28, wherein the releasable connection includes at least one engaging formation on one of the first or second parts and at least one receiving formation on the other of the first or second parts.
30. An apparatus according to any one of clauses 25 to 29, wherein one end of the second part includes a holding means for engaging with a spoke and an opposite end of the second part includes a recess for engaging with a bead of a tyre.
31. An apparatus according to clause 30, wherein one end of the first part includes a respective holding means for engaging with a spoke and an opposite end of the first part includes a recess for engaging with a bead of a tyre.
32. An apparatus according to any preceding clause, wherein the actuating member includes a storage means.
33. An apparatus according to clause 33, wherein the storage means includes a recess.
34. An apparatus according to clause 33, wherein the recess is covered by a cover.
35. An apparatus according to clause 34, wherein the cover is pivotally moveable between closed and open positions.
36. An apparatus according to any preceding clause, wherein a part of the actuating member is provided with an abrasive surface.
37. An apparatus according to any preceding clause, wherein a light emitting device is provided on the actuating member.
38. An apparatus substantially as hereinbefore described with reference to and/or as shown in the accompanying drawings.
39. Any novel feature or novel combination of features described herein with reference to and/or as shown in the accompanying drawings.

## Claims

1. An apparatus for holding a bicycle wheel in a bicycle frame, including:
an elongate member;
a first engaging member positioned at one end of the elongate member;
a second engaging member positioned at an opposite end of the elongate member; and
a pivotally moveable actuating member for effecting movement of the second engaging member towards the first engaging member;
wherein the actuating member includes holding means for engaging with a spoke of the bicycle wheel.

2. An apparatus according to claim 1, wherein the actuating member effects movement of the second engaging member along the elongate member.

3. An apparatus according to claim 1 or 2, wherein the actuating member is pivotally connected to the second engaging member or the elongate member.

4. An apparatus according to any one of claims 1 to 3, wherein the first and/or second engaging members are connected to the elongate member, and preferably wherein the first engaging member is threadedly connected to the elongate member.

5. An apparatus according to any preceding claim, wherein the second engaging member is slidably supported on the elongate member, preferably wherein the actuating member effects sliding movement of the second engaging member along the elongate member.

6. An apparatus according to any preceding claim, wherein the second engaging member is connected to the actuating member, and/or wherein the holding means is positioned remotely from a free end of the actuating member, and/or wherein the whole or a part of the actuating member is removable from the remainder of the apparatus.

7. An apparatus according to claim 6 wherein the holding means is positioned adjacent or close to a pivot axis of the actuating member.

8. An apparatus according to any preceding claim, wherein the holding means includes a recess for receiving a spoke of the bicycle wheel, preferably wherein the recess extends inwardly towards an axis of the actuating member, more preferably wherein the recess extends away from the free end of the actuating member.

9. An apparatus according to any preceding claim, wherein the holding means includes a projection, preferably wherein the projection extends away from a generally elongate axis of the actuating member and/or preferably wherein the projection extends away from the free end of the actuating member, and/or preferably wherein the projection provides at least one side wall of a recess to receive a spoke.

10. An apparatus according to any preceding claim, wherein a free end of the actuating member includes a recess for engaging with a bead of a tyre and/or wherein the actuating member includes a first part and a second part which are connected to each other.

11. An apparatus according to claim 10, wherein the first and second parts are connected to each other by a pivotal connection, preferably wherein an end of the second part remote from its pivotal connection to the first part includes a recess for engaging with a bead of a tyre and/or preferably wherein the pivotal connection permits the first and second parts to move between a storage position, in which the parts lie substantially side-to-side and an in-use position, in which the parts lie substantially end-to-end, and/or preferably wherein the first part of the actuating member is connected to the remainder of the apparatus by a releasable connection, and/or preferably wherein the first part and the second part are connected by a releasable connection.

12. An apparatus according to claim 11 wherein co-operating parts of the releasable connection are provided at or on respective ends of the first and second parts, preferably wherein co-operating parts of the releasable connection is provided at or on respective side walls of the first and second parts, and/or preferably wherein the releasable connection includes at least one engaging formation on one of the first or second parts and at least one receiving formation on the other of the first or second parts, and/or preferably wherein one end of the second part includes a holding means for engaging with a spoke and an opposite end of the second part includes a recess for engaging with a bead of a tyre.

13. An apparatus according to claim 12, wherein one end of the first part includes a respective holding means for engaging with a spoke and an opposite end of the first part includes a recess for engaging with a bead of a tyre.

14. An apparatus according to any preceding claim, wherein the actuating member includes a storage means, preferably including a recess which is preferably covered by a cover, preferably wherein the cover is pivotally moveable between closed and open positions.

15. An apparatus according to any preceding claim, wherein a part of the actuating member is provided with an abrasive surface and/or wherein a light emitting device is provided on the actuating member.
